# EUROPÄISCHE PATENTSCHRIFT

(11) **EP 3 437 796 B1**
(45) Veröffentlichungstag und Bekanntmachung des Hinweises auf die Patenterteilung: **25.01.2023**
(21) Anmeldenummer: 18187181.5
(22) Anmeldetag: 03.08.2018
(51) Int. Cl.: B23Q 17/24, B23Q 17/09

(54) **VERFAHREN ZUR VERMESSUNG VON STÜTZLEISTEN UND/ODER ZUMINDEST EINE SCHNEIDLEISTE AUFWEISENDEN WERKZEUGEN**
METHOD OF MEASURING SUPPORT PADS AND/OR TOOLS COMPRISING AT LEAST ONE CUTTER BAR
PROCÉDÉ DE MESURE DE BAGUETTES DE SUPPORT ET / OU D'OUTILS COMPORTANT AU MOINS UNE RÉGLETTE DE COUPE

(30) Priorität: 04.08.2017 DE 102017117756; 15.09.2017 DE 102017121427
(43) Veröffentlichungstag der Anmeldung: 06.02.2019
(73) Patentinhaber: E. Zoller GmbH & Co. KG Einstell- und Messgeräte, 74385 Pleidelsheim (DE)
(72) Erfinder: Pfau, Christian, 74379 Ingersheim (DE); Zoller, Alexander, 74385 Pleidelsheim (DE)
(74) Vertreter: Daub, Thomas

(56) Entgegenhaltungen:
- EP-A1- 2 633 950
- DE-A1- 4 343 404
- DE-T5-112014 006 253

## Beschreibung

### Stand der Technik

Die Erfindung betrifft ein Verfahren zur Vermessung von Stützleisten und/oder zumindest eine Schneidleiste aufweisenden Werkzeugen nach dem Anspruch 1.

So ein Verfahren und Werkzeuge sind aus der DE 43 43 404 A1 bekannt.

Die Aufgabe der Erfindung besteht insbesondere darin, ein Verfahren zur Vermessung von Stützleisten und/oder zumindest einer Schneidleiste mit hoher Einstellgenauigkeit bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Es wird ein Verfahren mit den Merkmalen des Anspruchs 1 vorgesclagen. Dadurch kann vorteilhaft eine hohe

Einstellgenauigkeit ermöglicht werden, insbesondere von zumindest einem Einstellparameter des Werkzeugs, beispielsweise einem Rundlauf. Insbesondere kann mittels einer Erfassung von Stützleisten und/oder zumindest einer Schneidleiste vorteilhaft ein aktueller Zustand des vermessenen und/oder inspizierten Werkzeugs registriert werden, wodurch insbesondere fehlerhafte Werkzeuge erkannt werden können. Zudem kann mittels einer berührungslosen Vermessung vorteilhaft eine Beschädigung des Werkzeugs bei einem Vermessungsvorgang vermieden werden. Zudem kann mittels einer automatisierten Vermessung und/oder Inspektion der Stützleisten und/oder zumindest einer Schneidleiste vorteilhaft ein Bedienaufwand verringert werden, wodurch insbesondere vorteilhaft durch Bedienfehler verursachte Fehlmessungen vermieden werden können.

Die Optikeinheit kann insbesondere zumindest einen Lichtsensor, beispielsweise einen CCD Sensor, zumindest eine Anordnung optischer Elemente wie Linsen und/oder Spiegel und/oder zumindest ein Objektiv umfassen. Zudem ist vorstellbar, dass die Optikeinheit zumindest eine Lichtquelle, insbesondere eine Infrarotlichtquelle, eine sichtbare Lichtquelle, eine ultraviolette Lichtquelle und/oder vorzugsweise eine Lichtquelle, welche eine Kombination von sichtbaren und unsichtbaren Licht emittiert, umfasst. Besonders bevorzugt umfasst die Optikeinheit zumindest eine Messanordnung mit einer Auflichtkamera und/oder eine Messanordnung mit einer Durchlichtkamera, wobei vorzugsweise jede der Messanordnungen zumindest eine Lichtquelle und zumindest einen Lichtdetektor umfasst. Eine berührungslose, insbesondere optische Vermessung kann insbesondere mittels einer Reflexion, einer Absorption und/oder einer Emission zumindest einer elektromagnetischen Welle und/oder zumindest eines elektromagnetischen Spektrums erfolgen. Vorzugsweise erfolgt die berührungslose Vermessung automatisch und/oder unabhängig von einem Bedienereingriff. Insbesondere umfasst das Werkzeugeinstell- und/oder Werkzeugmessgerät eine Steuereinheit, welche zumindest dazu vorgesehen ist, mittels einer speziellen Programmierung einen automatischen Vermessungsablauf und/oder einen automatischen Inspektionsablauf zumindest einer Stützleiste und/oder zumindest einer Schneidleiste zu steuern. Die Steuereinheit ist insbesondere zumindest teilweise einstückig mit der Stütz- und/oder Schneidleistenerfassungseinheit ausgebildet. Die Stütz- und/oder Schneidleistenerfassungseinheit ist insbesondere dazu vorgesehen, zumindest einen Stützleistenparameter und/oder zumindest einen Schneidleistenparameter, insbesondere automatisch gesteuert, zu erfassen. Der Stützleistenparameter kann insbesondere zumindest eine räumliche Position zumindest einer Stützleiste, zumindest einer Stützfläche zumindest einer Stützleiste und/oder zumindest einer Stützleistenkante zumindest einer Stützleiste in zumindest einer, vorzugsweise in zumindest zwei oder bevorzugt in drei Raumrichtungen, insbesondere relativ zu einer Rotationsachse des Werkzeugs und/oder relativ zu einer weiteren Stützleiste des Werkzeugs, umfassen. Alternativ oder zusätzlich kann der Stützleistenparameter zumindest eine Oberflächenbeschaffenheit, insbesondere eine Ebenheit, zumindest einer Oberfläche einer Stützleiste, insbesondere der Stützfläche, zumindest eine Kantenbeschaffenheit, insbesondere eine Geradheit, zumindest einer Kante zumindest einer Stützleiste, zumindest eine Anzahl an Stützleisten und/oder zumindest eine, insbesondere berechnete, Bahnkurve einer Stützleiste bei einer Rotation um die Rotationsachse des Werkzeugs, insbesondere der Reibahle, umfassen. Der Schneidleistenparameter kann insbesondere zumindest eine räumliche Position zumindest einer Schneidleiste, zumindest einer Oberfläche zumindest einer Schneidleiste und/oder zumindest einer Schneidkante und/oder Schneide zumindest einer Schneidleiste in zumindest einer, vorzugsweise in zumindest zwei oder bevorzugt in drei Raumrichtungen, insbesondere relativ zu einer Rotationsachse des Werkzeugs und/oder relativ zu einer Stützleiste des Werkzeugs, umfassen. Alternativ oder zusätzlich kann der Schneidleistenparameter zumindest eine Oberflächenbeschaffenheit, insbesondere eine Ebenheit, zumindest einer Oberfläche einer Schneidleiste, zumindest eine Kantenbeschaffenheit, insbesondere eine Geradheit, zumindest einer Schneidkante und/oder Schneide zumindest einer Schneidleiste, zumindest eine Anzahl an Schneidleisten und/oder zumindest eine, insbesondere berechnete, Bahnkurve einer Schneidleiste bei einer Rotation um die Rotationsachse des Werkzeugs, insbesondere der Reibahle, umfassen. Unter einem "berührungslosen Erfassen" soll insbesondere zumindest ein optisches Erfassen verstanden werden, wobei insbesondere auch weitere Erfassungsmethoden vorstellbar sind, wie beispielsweise ein induktives, ein kapazitives und/oder ein akustisches, beispielsweise mittels Ultraschallwellen, Erfassen. Vorzugsweise erfasst die Stütz- und/oder Schneidleistenerfassungseinheit zumindest einen Teil einer Stützleiste und/oder der Schneidleiste mittels der Auflichtkamera und/oder der Durchlichtkamera. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Stützleiste kann insbesondere als eine Führungsleiste ausgebildet sein. Insbesondere sind die Stützleisten zu einer Führung des Werkzeugs, insbesondere zumindest durch eine Dreipunktanlage in einer zu bearbeitenden Vertiefung, insbesondere in einer Bohrung, vorgesehen. Insbesondere stützt sich das Werkzeug, insbesondere die Reibahle, mittels der Stützleisten und/oder mit der Schneidleiste, insbesondere der Schneide, während eines Werkzeugeinsatzes, insbesondere während eines Reibens, an Wänden der zu bearbeitenden Vertiefung, insbesondere der Bohrung, ab. Vorzugsweise weist das Werkzeug, insbesondere die Reibahle, zumindest zwei, bevorzugt zumindest drei, Stützleisten auf. Alternativ ist vorstellbar, dass das Werkzeug, insbesondere die Reibahle, mehr als drei Stützleisten aufweist. Die Schneidleiste ist insbesondere zu einer Bearbeitung eines Werkstücks mittels zerspanen vorgesehen. Unter "zu einem Großteil automatisiert" soll insbesondere verstanden werden, dass zumindest 80 %, vorzugsweise zumindest 90 %, bevorzugt zumindest 95 % oder besonders bevorzugt 100 % aller Teilschritte eines Vorgangs automatisiert, insbesondere unabhängig von einem Bedienereingriff, ablaufen. Vorzugsweise dient eine Erfassung der Stützleisten und/oder zumindest einer Schneidleiste einer Prüfung und/oder Inspektion eines Werkzeugs, welche insbesondere im Vorfeld einer Werkzeugvermessung und/oder Werkzeugeinstellung durch das Werkzeugeinstell- und/oder Werkzeugmessgerät erfolgt. Es ist denkbar, dass ein negatives Prüfergebnis, insbesondere ein Feststellen von Beschädigungen und/oder Verunreinigungen an dem zu vermessendem und/oder einzustellendem Werkzeug eine anschließende Werkzeugvermessung und/oder Werkzeugeinstellung unterbindet. Dadurch können vorteilhaft fehlerhafte Werkzeuge im Vorfeld einer Vermessung, Einstellung und/oder Verwendung aussortiert werden, wodurch vorteilhaft Zeit und/oder Kosten eingespart werden können. Vorzugsweise ist die, insbesondere automatisierte, Prüfung und/oder Inspektion des Werkzeugs mittels der Erfassung der Stützleisten und/oder der Schneidleisten vor einem Werkzeugvermessungs- und/oder Werkzeugeinstellvorgang wahlweise zu- oder abschaltbar. Des Weiteren kann insbesondere eine Dokumentation eines Werkzeugzustands ermöglicht werden, wodurch beispielsweise in einem Reklamationsfall vorteilhaft nachweisbar gemacht werden kann, ob ein Werkzeug schon vor einer Vermessung und/oder Einstellung fehlerhaft gewesen ist. Dadurch kann vorteilhaft ein Auffinden von Fehlerquellen optimiert werden.

Zudem wird vorgeschlagen, dass, in zumindest einem Verfahrensschritt, vorzugsweise in einer Mehrzahl an Verfahrensschritten, zumindest eine, vorzugsweise zumindest zwei, bevorzugt zumindest drei, Stützleisten und/oder zumindest eine Schneidleiste des Werkzeugs, insbesondere der Reibahle, von der Stütz- und/oder Schneidleistenerfassungseinheit zumindest mittels einer Durchlichtkamera der Optikeinheit, insbesondere zumindest zu einem Großteil automatisiert, optisch erfasst werden. Dadurch kann vorteilhaft eine hohe Einstellgenauigkeit ermöglicht werden, insbesondere von zumindest einem Einstellparameter, beispielsweise des Rundlaufs, des Werkzeugs. Zudem kann vorteilhaft ein aktueller Zustand des vermessenen Werkzeugs, insbesondere dessen Stützleisten- und/oder Schneidkanten, registriert werden, wodurch insbesondere fehlerhafte Werkzeuge erkannt werden können. Zudem kann mittels einer berührungslosen Vermessung vorteilhaft eine Beschädigung des Werkzeugs bei einem Vermessungsvorgang vermieden werden. Die Stütz- und/oder Schneidleistenerfassungseinheit ist insbesondere zumindest teilweise einstückig mit der Optikeinheit ausgebildet. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Vorzugsweise laufen Verfahrensschritte zur Erfassung von Stützleisten und/oder Schneidleisten, wie beispielsweise eine Rotation der Stützleiste und/oder der Schneidleiste in ein Blickfeld der Optikeinheit, ein Fokussieren der Optikeinheit, eine Aufnahme von visuellen Daten mittels der Optikeinheit und/oder eine Analyse durch die Optikeinheit aufgenommener Daten mittels der Stütz- und/oder Schneidleistenerfassungseinheit, automatisiert, vorzugsweise durch die Steuereinheit des Werkzeugeinstell- und/oder Werkzeugmessgeräts mittels einer speziellen Programmierung gesteuert, ab.

Ferner wird vorgeschlagen, dass, in zumindest einem Verfahrensschritt, ein Rundlauf des Werkzeugs, insbesondere der Reibahle, von einer Rundlauferfassungseinheit der Stütz- und/oder Schneidleistenerfassungseinheit, insbesondere mittels Daten der Stütz- und/oder Schneidleistenerfassungseinheit, vorzugsweise zumindest zu einem Großteil automatisiert, berührungslos erfasst wird. Dadurch kann vorteilhaft eine einfache Rundlauferkennung eines Werkzeugs, welche insbesondere berührungslos, werkzeugschonend und/oder unabhängig von einer Rotation des Werkzeugs ablaufen kann, ermöglicht werden. Dadurch kann vorteilhaft eine Rundlaufeinstellung eines Werkzeugs und/oder eine Rundlaufbestimmung eines Werkzeugs vereinfacht werden. Außerdem kann vorteilhaft eine Rundlaufprüfung eines Werkzeugs und/oder eine Rundlaufeinstellung eines Werkzeugs unabhängig von Rundlaufprüfflächen des Werkzeugs, ausschließlich auf Basis von, insbesondere zumindest zwei, vorzugsweise zumindest drei, Stützleisten, ermöglicht werden. Die Rundlauferfassungseinheit ist insbesondere zumindest teilweise einstückig mit der Stütz- und/oder Schneidleistenerfassungseinheit ausgebildet. Die Rundlauferfassungseinheit ist insbesondere zumindest teilweise einstückig mit der Optikeinheit ausgebildet. Die Rundlauferfassungseinheit ist insbesondere zumindest teilweise einstückig mit der Steuereinheit ausgebildet. Vorzugsweise wird mittels der Rundlauferfassungseinheit der Rundlauf eines Werkzeugs von einer Steuereinheit des Werkzeugeinstell- und/oder Werkzeugmessgeräts auf Basis von Daten der Stütz- und/oder Schneidleistenerfassungseinheit und/oder der Optikeinheit berechnet. Unter einer "Steuereinheit" soll insbesondere eine elektronische Einheit verstanden werden, die vorzugsweise in einer Steuer- und/oder Regeleinheit eines Werkzeugeinstell- und/oder Werkzeugmessgeräts zumindest teilweise integriert ist und die vorzugsweise dazu vorgesehen ist, zumindest die Rundlauferfassungseinheit, zumindest die Stütz- und/oder Schneidleistenerfassungseinheit, zumindest die Optikeinheit, zumindest eine Konturprüfeinheit, zumindest eine Flächenprüfeinheit und/oder zumindest eine Ausgabeeinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Speichereinheit kann insbesondere ein RAM, insbesondere eine Festplatte und/oder einen Flash-Speicher, umfassen. Außerdem wird vorgeschlagen, dass, in zumindest einem Verfahrensschritt, von der Rundlauferfassungseinheit mittels einer Steuereinheit des Werkzeugeinstell- und/oder Werkzeugmessgeräts, vorzugsweise mittels einer speziellen Programmierung der Steuereinheit, auf Basis räumlicher Positionen zumindest einer Stützleiste, vorzugsweise zumindest zweier, bevorzugt zumindest dreier, Stützleisten ein Mittelpunkt, vorzugsweise zumindest zu einem Großteil automatisiert, bestimmt wird. Dadurch kann vorteilhaft eine präzise Bestimmung des Rundlaufs, insbesondere einer Abweichung des Rundlaufs von einem Sollrundlauf, ermöglicht werden. Außerdem kann vorteilhaft eine Rundlaufprüfung eines Werkzeugs und/oder Rundlaufeinstellung eines Werkzeugs unabhängig von Rundlaufprüfflächen des Werkzeugs, ausschließlich auf Basis von, insbesondere zumindest zwei, vorzugsweise zumindest drei, Stützleisten, ermöglicht werden. Vorzugsweise bildet die Rundlauferfassungseinheit, insbesondere mittels der Steuereinheit, aus einer räumlichen Verteilung, insbesondere der Stützflächen und/oder der Stützleistenkanten, von zumindest zwei, vorzugsweise von zumindest drei, bevorzugt von zumindest vier und/oder besonders bevorzugt von zumindest fünf Stützleisten, einen Mittelpunkt, wobei insbesondere die räumliche Verteilung zur Berechnung des Mittelpunkts einer Verteilung auf einer zweidimensionalen Ebene, deren Flächennormale parallel zu einer Rotationsachse des Werkzeugs, insbesondere der Reibahle, verläuft, entspricht. Vorzugsweise ist der Mittelpunkt ein Mittelpunkt eines Kreises, welcher durch die zumindest zwei, vorzugsweise durch die zumindest drei, Stützflächen, insbesondere in einer Draufsicht, gebildet wird, wobei insbesondere jeweils zumindest ein Teil der Stützfläche zumindest einer Stützleiste und/oder zumindest einer Stützflächenkante zumindest einer Stützfläche einen Punkt bildet, welcher zu einer Berechnung des Kreises herangezogen werden. Unter einer "räumlichen Position einer Stützleiste" soll insbesondere eine Position eines Punktes auf der Stützleiste, vorzugsweise eines Kanten- und/oder Flächenpunktes der Stützleiste, auf einer zweidimensionalen Ebene, welche eine Flächennormale aufweist, die parallel zu der Rotationsachse des Werkzeugs, insbesondere der Reibahle, verläuft, verstanden werden. Vorzugsweise liegen alle zur Berechnung des Mittelpunkts herangezogenen räumlichen Positionen auf derselben, eine parallel zur Rotationsachse des Werkzeugs verlaufende Flächennormale aufweisenden Ebene.

Des Weiteren wird vorgeschlagen, dass, in zumindest einem Verfahrensschritt, von der Rundlauferfassungseinheit mittels der Steuereinheit des Werkzeugeinstell- und/oder Werkzeugmessgeräts, vorzugsweise mittels einer speziellen Programmierung der Steuereinheit, eine Position eines gemeinsamen Mittelpunkts der, insbesondere zumindest zwei, vorzugsweise zumindest drei, Stützleisten mit einer Position einer Rotationsachse des Werkzeugs, insbesondere der Reibahle, insbesondere zumindest zu einem Großteil automatisiert, abgeglichen wird. Dadurch kann vorteilhaft eine präzise Bestimmung des Rundlaufs, insbesondere einer Abweichung des Rundlaufs von einem Sollrundlauf, ermöglicht werden. Außerdem kann vorteilhaft eine Rundlaufprüfung eines Werkzeugs und/oder Rundlaufeinstellung eines Werkzeugs unabhängig von Rundlaufprüfflächen des Werkzeugs, ausschließlich auf Basis von, insbesondere zumindest zwei, vorzugsweise zumindest drei, Stützleisten, ermöglicht werden. Vorzugsweise liegen die von der Rundlauferfassungseinheit mittels der Steuereinheit ermittelte Position des gemeinsamen Mittelpunkts der Stützleisten und die Position der Rotationsachse, welche insbesondere von der Rundlauferfassungseinheit mittels der Steuereinheit abgeglichen werden, auf einer Abgleichebene, welche eine Flächennormale aufweist, die senkrecht zu der Rotationsachse des Werkzeugs, insbesondere der Reibahle, steht. Insbesondere ist die Position der Rotationsachse als Schnittpunkt der Rotationsachse mit der Abgleichebene ausgebildet. Insbesondere wird bei einem Abgleichen der Positionen zumindest ein Abgleichparameter ermittelt und vorzugsweise in der Speichereinheit der Steuereinheit gespeichert. Der Abgleichparameter kann insbesondere zumindest eine Entfernung, zumindest einen Winkel, zumindest eine Gütevariable, insbesondere eine Rundlaufgütevariable und/oder eine Kenngröße für ein Einstellmaß umfassen. Vorzugsweise dient der Abgleichparameter zu einer Ermittlung einer Anpassungsgröße für eine Rundlaufkorrektur. Insbesondere ist das Werkzeug, insbesondere die Reibahle, dazu vorgesehen, insbesondere bei einem Normalbetrieb, um die Rotationsachse des Werkzeugs, insbesondere der Reibahle, zu rotieren. Vorzugsweise umfasst das Werkzeug, insbesondere die Reibahle, zumindest einen Schaft, welcher zumindest im Wesentlichen rotationssymmetrisch zu der Rotationsachse ausgebildet ist. Unter "im Wesentlichen rotationssymmetrisch" soll insbesondere verstanden werden, dass höchstens 2 %, vorzugsweise höchstens 5 %, vorteilhaft höchstens 10 %, bevorzugt höchstens 20 % oder besonders bevorzugt höchstens 25 % eines Bauteils rotationsasymmetrisch ist.

Außerdem wird vorgeschlagen, dass, in zumindest einem Verfahrensschritt, von der Rundlauferfassungseinheit mittels der Steuereinheit des Werkzeugeinstell- und/oder Werkzeugmessgeräts, vorzugsweise mittels einer speziellen Programmierung der Steuereinheit, zumindest eine Kenngröße für ein Einstellmaß der Stützleisten zu einer Überlagerung eines Mittelpunkts der Stützleisten mit einer Rotationsachse des Werkzeugs, insbesondere der Reibahle, insbesondere zumindest zu einem Großteil automatisiert, ermittelt wird. Dadurch kann vorteilhaft eine präzise Rundlaufeinstellung, insbesondere Rundlaufkorrektur, ermöglicht werden. Vorteilhaft kann eine Bedienerfreundlichkeit erhöht werden. Außerdem kann vorteilhaft eine Zeitersparnis, insbesondere bei einer Rundlaufeinstellung, erreicht werden, insbesondere indem ein Verstellen der Stützleisten mittels einer Trial-and-Error Methode, bei welcher ein Bediener nach jeder Verstellung einen Rundlauf erneut prüfen muss, vermieden werden. Insbesondere kann eine einfache Rundlaufeinstellung ermöglicht werden, welche insbesondere nahezu unabhängig ist von einer Erfahrung eines Bedieners. Ein Einstellmaß kann insbesondere als eine Schraube, insbesondere als eine Abdrückschraube, des Werkzeugs, insbesondere der Reibahle, welche insbesondere zu einer Verstellung zumindest einer räumlichen Position einer Stützleiste vorgesehen ist, und/oder als ein weiteres Element, welches dazu vorgesehen ist, eine räumliche Position der Stützleiste vorzunehmen und/oder zu erlauben, ausgebildet sein. Eine Kenngröße für ein Einstellmaß kann insbesondere eine Anzahl an Umdrehungen von zumindest einer Schraube, zumindest eine Drehrichtung von zumindest einer Schraube, zumindest eine Vorgabe für eine Positionsänderung zumindest einer Stützleiste, insbesondere eine Entfernung der Stützleiste von der Rotationsachse und/oder zumindest eine weitere Kenngröße, deren Verstellung den Rundlauf des Werkzeugs, insbesondere der Reibahle, beeinflusst, umfassen.

Ferner wird vorgeschlagen, dass, in zumindest einem Verfahrensschritt, von einer Positionierungseinheit des Werkzeugeinstell- und/oder Werkzeugmessgeräts eine automatische Positionierung des Werkzeugs, insbesondere der Reibahle, in zumindest eine Verstellposition des Werkzeugs, insbesondere der Reibahle, auf Basis mittels der Stütz- und/oder Schneidleistenerfassungseinheit erfasster Daten vorgenommen wird. Dadurch kann vorteilhaft eine hohe Bedienerfreundlichkeit erreicht werden, insbesondere indem eine einfache Rundlaufeinstellung ermöglicht werden kann. Zudem kann vorteilhaft eine Rundlaufeinstellung beschleunigt werden. Die Positionierungseinheit ist vorzugsweise als eine Dreheinheit ausgebildet, welche dazu vorgesehen ist, das Werkzeug, insbesondere die Reibahle, in einer Rotationsposition zu bewegen und/oder insbesondere zu fixieren. Vorzugsweise ist die Positionierungseinheit zumindest teilweise einstückig mit einer Werkzeugaufnahme des Werkzeugeinstell- und/oder Werkzeugmessgeräts ausgebildet. Vorteilhaft umfasst die Verstellposition zumindest eine Position des Werkzeugs, insbesondere der Reibahle, in Relation zu dem Werkzeugeinstell- und/oder Werkzeugmessgerät, welche dazu vorgesehen ist, ein zu verstellendes Bauteil, insbesondere eine zu verstellende Stützleiste und/oder Schneidleiste, einfach für einen Bediener erreichbar zu machen. Es ist vorstellbar, dass in der Verstellposition zumindest ein zu verstellendes Bauteil, insbesondere zumindest eine Stützleiste und/oder Schneidleiste, in einem Blickfeld der Optikeinheit, insbesondere der Durchlichtkamera und/oder der Auflichtkamera der Optikeinheit, liegt. Vorzugsweise wird die Stütz- und/oder Schneidleiste und/oder ein Verstellelement der Stütz- und/oder Schneidleiste, wie beispielsweise die Abdrückschraube, durch die Positionierungseinheit in eine Position bewegt und/oder gedreht, welche für einen Bediener einfach erreichbar ist und/oder im Blickfeld der Durchlichtkamera und/oder der Auflichtkamera der Optikeinheit liegt. Insbesondere wird dieser Vorgang nacheinander für jede, insbesondere zu verstellende, Stützleiste und/oder Schneidleiste des Werkzeugs durchgeführt. Es ist vorstellbar, dass eine Ausgabeeinheit des Werkzeugeinstell- und/oder Werkzeugmessgeräts eine Anzeige der gemessenen Positionen der Stützleisten und/oder der Schneidleiste zusammen mit Idealpositionen der Stützleisten und/oder der Schneidleiste ausgibt, insbesondere in Kombination mit einer Anzeige zumindest einer möglichen Modifikation zu einem Erreichen der Idealpositionen ausgehend von den gemessenen Positionen der Stützleisten und/oder der Schneidleiste.

Des Weiteren wird vorgeschlagen, dass, in zumindest einem Verfahrensschritt, von einer Konturprüfeinheit der Stütz- und/oder Schneidleistenerfassungseinheit mittels der Optikeinheit, insbesondere mittels einer Durchlichtkamera der Optikeinheit, eine Außenkontur zumindest einer Stützleiste und/oder zumindest einer Schneidleiste, insbesondere automatisch, auf Defektstellen untersucht wird. Dadurch kann vorteilhaft eine gute Fehlererkennung ermöglicht werden. Vorteilhaft können dadurch fehlerhafte Werkzeuge erkannt und/oder aussortiert werden, wodurch insbesondere eine Häufigkeit von Produktionsfehlern reduziert und/oder Beschädigungen durch Bearbeitung eines Produkts durch fehlerhafte Werkzeuge vermieden werden können. Außerdem kann vorteilhaft eine hohe Genauigkeit einer auf der Basis von Stützleisten erfolgenden Rundlaufeinstellung erreicht werden. Vorzugsweise untersucht die Konturprüfeinheit zumindest eine Außenkontur zumindest einer Stützleiste und/oder zumindest einer Schneidleiste auf Abweichungen von einem geraden Verlauf. Insbesondere erkennt die Konturprüfeinheit, insbesondere mittels der Steuereinheit, selbsttätig Abweichungen von einer, insbesondere in der Speichereinheit der Steuereinheit hinterlegten, Sollkontur. Vorzugweise werden Abweichungen von dem geraden Verlauf und/oder der Sollkontur von der Konturprüfeinheit, insbesondere mittels der Steuereinheit, als Defektstellen erkannt. Eine Defektstelle kann eine Einkerbung in der Stützleiste und/oder der Schneidleiste, einen Riss in der Stützleiste und/oder der Schneidleiste, auf der Stützleiste und/oder der Schneidleiste aufliegendes Material, eine Ausbeulung in der Stützleiste und/oder der Schneidleiste und/oder eine andere Abweichung von einer geraden Außenkontur der Stützleiste und/oder der Schneidleiste umfassen. Die Konturprüfeinheit ist insbesondere zumindest teilweise einstückig mit der Optikeinheit ausgebildet. Die Konturprüfeinheit ist insbesondere zumindest teilweise einstückig mit der Steuereinheit ausgebildet. Die Konturprüfeinheit ist insbesondere zumindest teilweise einstückig mit der Stütz- und/oder Schneidleistenerfassungseinheit ausgebildet.

Zudem wird vorgeschlagen, dass, in zumindest einem Verfahrensschritt mittels einer Steuereinheit des Werkzeugeinstell- und/oder Werkzeugmessgeräts, vorzugsweise mittels einer speziellen Programmierung der Steuereinheit, eine mittels der Konturprüfeinheit ermittelte Außenkontur zumindest einer Stützleiste und/oder zumindest einer Schneidleiste mit einer, insbesondere in der Steuereinheit festgelegten, Sollkontur, insbesondere der Stützleiste und/oder der Schneidleiste, insbesondere zumindest zu einem Großteil automatisiert, abgeglichen wird. Dadurch kann vorteilhaft eine automatische Defekterkennung verbessert werden. Insbesondere kann dadurch eine gute Fehlererkennung ermöglicht werden. Vorteilhaft können dadurch fehlerhafte Werkzeuge erkannt und/oder aussortiert werden, wodurch insbesondere eine Häufigkeit von Produktionsfehlern reduziert und/oder Beschädigungen durch Bearbeitung eines Produkts durch fehlerhafte Werkzeuge vermieden werden können. Es ist vorstellbar, dass verschiedene Sollkonturen für verschiedene Werkzeuge, Stützleisten und/oder Schneidleisten in der Speichereinheit ablegbar und von der Steuereinheit für einen Abgleich auswählbar sind. Vorzugsweise ist die Sollkontur vollständig gerade.

Weiterhin wird vorgeschlagen, dass, in zumindest einem Verfahrensschritt, von einer Ausgabeeinheit des Werkzeugeinstell- und/oder Werkzeugmessgeräts, insbesondere mittels der Steuereinheit, vorzugsweise mittels einer speziellen Programmierung der Steuereinheit, eine Abweichung einer mittels der Konturprüfeinheit gemessenen und/oder geprüften Außenkontur zumindest einer Stützleiste und/oder zumindest einer Schneidleiste von einer Sollkontur gemeinsam mit einem, insbesondere einstellbaren, Toleranzband ausgegeben wird. Dadurch kann vorteilhaft eine Bedienerfreundlichkeit erhöht werden, insbesondere indem ein Bediener ohne große Vorkenntnisse einfach erkennen kann, ob ein Werkzeug in Ordnung ist. Die Ausgabeeinheit umfasst vorzugsweise zumindest ein Display, welcher vorzugsweise als ein Bildschirm ausgebildet ist. Es ist vorstellbar, dass die Ausgabeeinheit, insbesondere mittels der Steuereinheit, Abweichungen der Außenkontur der Stützleiste und/oder der Schneidleiste von der Sollkontur je nach Abweichungsrichtung unterschiedlich, beispielsweise farbig, kennzeichnet. Zudem ist vorstellbar, dass die Ausgabeeinheit, insbesondere mittels der Steuereinheit, Abweichungen der Außenkontur der Stützleiste und/oder der Schneidleiste von der Sollkontur, welche über das Toleranzband hinausgehen, unterschiedlich, beispielsweise farbig, kennzeichnet. Das Toleranzband umfasst insbesondere einen Bereich akzeptierbarer Abweichungen von einer idealen Geradheit und/oder der Sollkontur. Vorzugsweise ist das Toleranzband, insbesondere durch einen Bediener, insbesondere in beide Abweichungsrichtungen, einstellbar. Vorzugsweise ist die Ausgabe der Konturprüfeinheit speicherbar, wodurch vorteilhaft eine Entwicklung und/oder Änderung eines Werkzeugs im Lauf seiner Lebensdauer überwacht werden kann.

Ferner wird vorgeschlagen, dass, in zumindest einem Verfahrensschritt, von einer Flächenprüfeinheit der Stütz- und/oder Schneidleistenerfassungseinheit mittels der Optikeinheit, insbesondere mittels der Auflichtkamera der Optikeinheit, ein, insbesondere automatisch aufgenommenes und/oder automatisch zusammengesetztes, Bild zumindest einer Stützleiste und/oder zumindest einer Schneidleiste, vorzugsweise einer Stützfläche der Stützleiste und/oder einer Oberfläche der Schneidleiste, aufgenommen wird. Dadurch kann vorteilhaft eine gute Fehlererkennung ermöglicht werden. Vorteilhaft können dadurch fehlerhafte Werkzeuge erkannt und/oder aussortiert werden, wodurch insbesondere eine Häufigkeit von Produktionsfehlern reduziert und/oder Beschädigungen durch Bearbeitung eines Produkts durch fehlerhafte Werkzeuge vermieden werden können. Vorzugsweise untersucht die Flächenprüfeinheit zumindest eine Oberfläche zumindest einer Stützleiste und/oder zumindest eine Oberfläche der Schneidleiste auf Abweichungen von einem gleichmäßigen Verlauf. Insbesondere erkennt die Flächenprüfeinheit, insbesondere mittels der Steuereinheit, selbsttätig Abweichungen von einem gleichmäßigen und/oder ebenen Verlauf. Zudem ist vorstellbar, dass die Flächenprüfeinheit Verfärbungen auf der Oberfläche erkennt. Vorzugweise werden Abweichungen von dem gleichmäßigen Verlauf und/oder der gleichmäßigen Färbung, insbesondere mittels der Steuereinheit, als Defektstellen erkannt. Die Flächenprüfeinheit ist zumindest teilweise einstückig mit der Optikeinheit ausgebildet. Es ist vorstellbar, dass das mittels der Flächenprüfeinheit aufgenommene, insbesondere automatisch zusammengesetzte, Bild, vorzugsweise mittels der Ausgabeeinheit, einem Bediener visuell verfügbar gemacht wird. Zudem ist vorstellbar, dass die Ausgabeeinheit, insbesondere mittels der Steuereinheit, weitere, insbesondere ältere, insbesondere von demselben Werkzeug, einem anderen Werkzeug und/oder einem unbeschädigten Beispielwerkzeug durch die Flächenprüfeinheit aufgenommene Bilder zu einem Vergleich darstellt, wodurch vorteilhaft Abweichungen gut erkennbar gemacht werden können. Vorzugsweise nimmt die Flächenprüfeinheit eine Mehrzahl einzelner, insbesondere automatisch belichteter, Bilder auf und setzt sie, insbesondere mittels der Steuereinheit, zu einem einzelnen Bild zusammen, welches insbesondere die komplette Stützleiste und/oder Schneidleiste, insbesondere die komplette Stützfläche der Stützleiste und/oder die komplette Oberfläche der Schneidleiste, insbesondere eine Oberfläche eines Spanraums der Schneidleiste und/oder einer Schneide der Schneidleiste, zeigt. Die Flächenprüfeinheit ist insbesondere zumindest teilweise einstückig mit der Steuereinheit ausgebildet. Die Flächenprüfeinheit ist insbesondere zumindest teilweise einstückig mit der Stütz- und/oder Schneidleistenerfassungseinheit ausgebildet.

Des Weiteren wird vorgeschlagen, dass, in zumindest einem Verfahrensschritt, von der Flächenprüfeinheit mittels einer Steuereinheit des Werkzeugeinstell- und/oder Werkzeugmessgeräts eine automatische Bilderkennung zur Untersuchung zumindest einer Stützfläche der Stützleiste und/oder zumindest einer Oberfläche der Schneidleiste auf Defektstellen durchgeführt wird. Dadurch kann vorteilhaft eine gute Fehlererkennung ermöglicht werden. Vorteilhaft können dadurch fehlerhafte Werkzeuge erkannt und/oder aussortiert werden, wodurch insbesondere eine Häufigkeit von Produktionsfehlern reduziert und/oder Beschädigungen durch Bearbeitung eines Produkts durch fehlerhafte Werkzeuge vermieden werden können. Eine Defektstelle kann eine Einkerbung in der Stützleiste und/oder der Schneidleiste, einen Riss in der Stützleiste und/oder der Schneidleiste, auf der Stützleiste und/oder der Schneidleiste aufliegendes Material, eine Ausbeulung in der Stützleiste und/oder der Schneidleiste und/oder eine andere Abweichung von einer gleichmäßigen Oberfläche der Stützleiste und/oder der Oberfläche der Schneidleiste umfassen.

Außerdem wird vorgeschlagen, dass, in zumindest einem Verfahrensschritt, von der Flächenprüfeinheit und/oder von der Konturprüfeinheit bei einer Identifikation zumindest einer Defektstelle eine Warnmeldung ausgelöst wird. Dadurch kann vorteilhaft eine gute Fehlererkennung ermöglicht werden. Vorteilhaft können dadurch fehlerhafte Werkzeuge erkannt und/oder aussortiert werden, wodurch insbesondere eine Häufigkeit von Produktionsfehlern reduziert und/oder Beschädigungen durch Bearbeitung eines Produkts durch fehlerhafte Werkzeuge vermieden werden können. Zudem kann vorteilhaft eine einfache Bedienbarkeit ermöglicht werden, insbesondere indem eine Fehlererkennung unabhängig von Bedienerkenntnissen erkenntlich gemacht werden kann. Eine Warnmeldung kann ein akustisches Signal und/oder ein optisches Signal, insbesondere der Anzeigeeinheit, umfassen. Zudem ist vorstellbar, dass bei einer Fehlererkennung ein Unterbruch eines automatischen Mess- und/oder Einstellvorgangs des Werkzeugeinstell- und/oder Werkzeugmessgeräts erfolgt, welcher eine Benutzerfreigabe erfordert.

Zudem wird vorgeschlagen, dass, in zumindest einem Verfahrensschritt, der Rundlauf zumindest von einer Tasteinheit des Werkzeugeinstell- und/oder Werkzeugmessgeräts taktil erfasst wird, wobei insbesondere das Werkzeug, insbesondere die Reibahle, bei der Erfassung des Rundlaufs um weniger als 360° gedreht wird. Dadurch kann vorteilhaft eine präzise Rundlauferfassung, insbesondere unabhängig von Rundlaufprüfflächen, ermöglicht werden. Bei einer taktilen Rundlauferfassung wird insbesondere die Oberfläche des Werkzeugs, insbesondere der Reibahle, vorzugsweise zumindest die Oberfläche zumindest einer Stützleiste, vorzugsweise zumindest zweier, bevorzugt zumindest dreier, Stützleisten in Berührungskontakt mit zumindest einem Taster der Tasteinheit gebracht. Vorteilhaft kann aus der Position der Stützleisten ein Rundlauf und/oder eine Kenngröße für ein Einstellmaß ermittelt werden. Vorteilhaft kann eine taktile Erfassung der Stützleisten mittels einer Rotation des Werkzeugs, insbesondere der Reibahle, um einen Winkel von weniger als 360° ermöglicht werden, insbesondere da innerhalb dieses Winkels jede Stützleiste angefahren werden kann, wodurch vorteilhaft eine schnelle Rundlauferkennung ermöglicht werden kann.

Außerdem wird ein Werkzeugeinstell- und/oder Werkzeugmessgerät mit einer Stütz- und/oder Schneidleistenerfassungseinheit, welche dazu vorgesehen ist, zumindest eine Kenngröße zumindest eines Werkzeugs, insbesondere einer Reibahle und/oder zumindest einer Stützleiste und/oder zumindest einer Schneidleiste eines Werkzeugs, insbesondere einer Reibahle, vorzugsweise zumindest zu einem Großteil automatisiert, zu erfassen, vorgeschlagen. Dadurch kann vorteilhaft eine hohe Einstellgenauigkeit ermöglicht werden, insbesondere von zumindest einem Einstellparameter, beispielsweise eines Rundlaufs, des Werkzeugs. Insbesondere kann mittels einer Erfassung von Stützleisten und/oder Schneidleisten vorteilhaft ein aktueller Zustand des vermessenen Werkzeugs registriert werden, wodurch insbesondere fehlerhafte Werkzeuge erkannt werden können. Zudem kann mittels einer berührungslosen Vermessung und/oder Inspektion vorteilhaft eine Beschädigung des Werkzeugs bei einem Vermessungsvorgang vermieden werden. Insbesondere umfasst die Kenngröße den Rundlauf des Werkzeugs, insbesondere der Reibahle, die Position des Werkzeugs, insbesondere der Reibahle, eine Beschaffenheit des Werkzeugs, insbesondere der Reibahle, insbesondere eine Oberflächenbeschaffenheit und/oder eine Konturbeschaffenheit und/oder einen Zustand des Werkzeugs, insbesondere der Reibahle, insbesondere in Bezug auf eine Defektstellendichte. Vorzugsweise umfasst die Kenngröße die Oberflächenbeschaffenheit der Oberfläche zumindest einer Stützleiste und/oder zumindest einer Schneidleiste, insbesondere die Stützflächenbeschaffenheit zumindest einer Stützleiste, die Kantenbeschaffenheit zumindest der Stützleistenkante zumindest einer Stützleiste und/oder die Beschaffenheit der Schneide, insbesondere der Schneidkante der Schneidleiste.

Zudem wird ein System mit zumindest einem Werkzeugeinstell- und/oder Werkzeugmessgerät mit einer Stütz- und/oder Schneidleistenerfassungseinheit und mit zumindest einem, insbesondere Stützleisten und/oder zumindest eine Schneidleiste aufweisenden, Werkzeug, insbesondere einer Reibahle, vorgeschlagen. Vorteilhaft kann eine hohe Einstellgenauigkeit ermöglicht werden.

Das erfindungsgemäße Verfahren, das erfindungsgemäße Werkzeugeinstell- und/oder Werkzeugmessgerät und/oder das erfindungsgemäße System soll/sollen hierbei nicht auf die oben beschriebene Anwendung und Ausführungsform beschränkt sein. Insbesondere kann/können das erfindungsgemäße Verfahren, das erfindungsgemäße Werkzeugeinstell- und/oder Werkzeugmessgerät und/oder das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Draufsicht auf einen Ausschnitt eines Systems mit einem Werkzeugeinstell- und/oder Werkzeugmessgerät und mit einem Werkzeug, insbesondere einer Reibahle,
- Fig. 2: eine schematische, perspektivische Ansicht des Werkzeugeinstell- und/oder Werkzeugmessgeräts mit einer Ausgabeeinheit und einer Stütz- und/oder Schneidleistenerfassungseinheit,
- Fig. 3: eine schematische Draufsicht auf das Werkzeug, insbesondere auf die Reibahle,
- Fig. 4: eine schematische, perspektivische Ansicht des Werkzeugs, insbesondere der Reibahle,
- Fig. 5: a) eine in der Ausgabeeinheit darstellbare Anzeige einer Außenkontur einer Stützleiste des Werkzeugs, insbesondere der Reibahle, b) eine weitere in der Ausgabeeinheit darstellbare Anzeige einer Außenkontur einer Stützleiste des Werkzeugs, insbesondere der Reibahle,
- Fig. 6: ein Ablaufdiagramm eines Verfahrens zur Vermessung von Stützleisten und/oder zumindest eine Schneidleiste aufweisenden Werkzeugen, insbesondere Reibahlen,
- Fig. 7: ein schematisches Schaltbild der Stütz- und/oder Schneidleistenerfassungseinheit und
- Fig. 8: eine beispielhafte, in der Ausgabeeinheit darstellbare Anzeige einer Ausgabe einer Flächenprüfeinheit der Stütz- und/oder Schneidleistenerfassungseinheit.

### Beschreibung der Ausführungsbeispiele

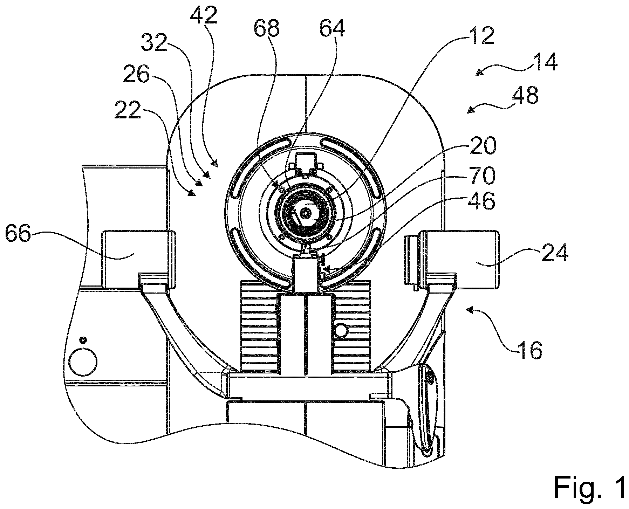

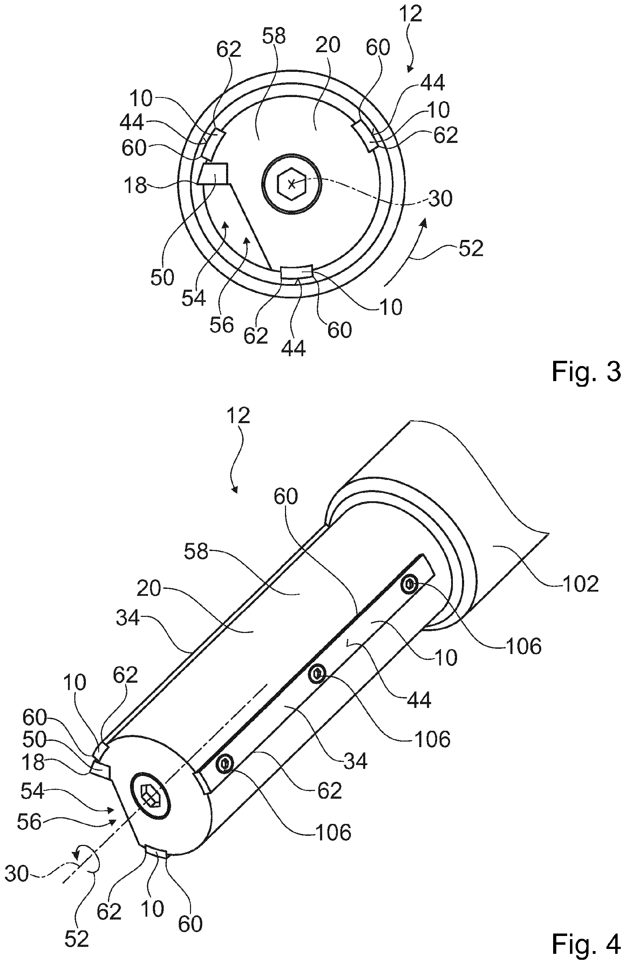

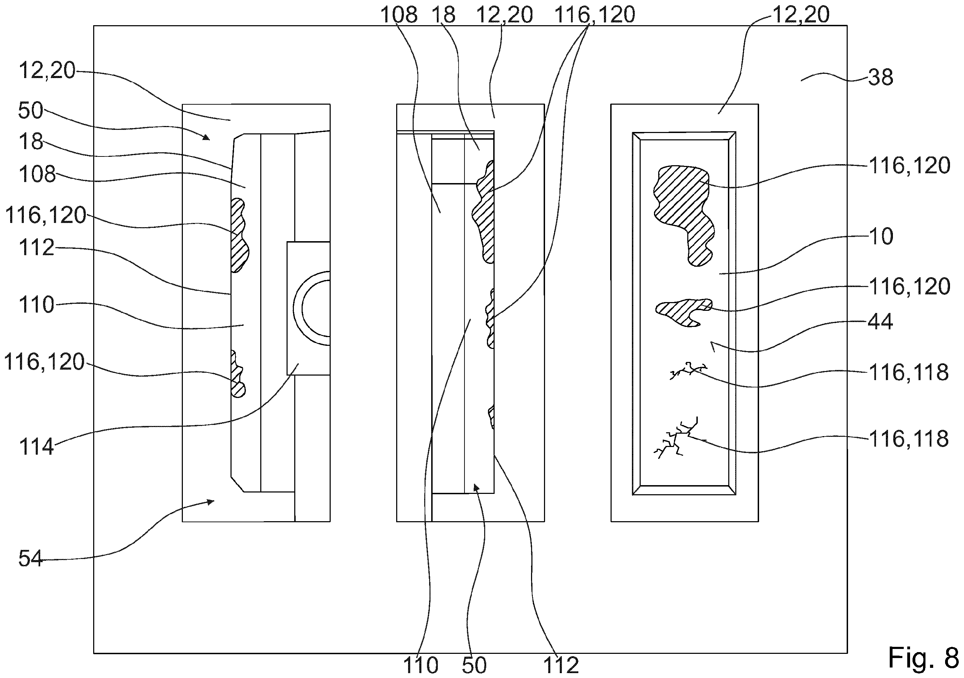

Fig. 1 zeigt einen Ausschnitt eines Systems 48 mit einem Werkzeugeinstell- und/oder Werkzeugmessgerät 14 und mit einem Werkzeug 12. Das Werkzeug 12 ist als eine Reibahle 20 ausgebildet. Das Werkzeug 12 weist eine Schneidleiste 108 auf (vgl. Fig. 8). Die Schneidleiste 108 weist ein Messer 50 auf (vgl. Fig. 3). Die Schneidleiste 108 weist eine Oberfläche 110 auf. Das Messer 50 weist eine Schneide 18 und/oder eine Schneidkante 112 auf. Die Reibahle 20 ist als eine Einschneiden-Reibahle ausgebildet. Alternativ kann die Reibahle 20 mehr als eine Schneide 18 aufweisen. Das Werkzeug 12 ist dazu vorgesehen, in einem Betrieb in eine Drehrichtung 52 um eine Rotationsachse 30 zu rotieren (vgl. Fig. 4). Das Werkzeug 12 weist einen Grundkörper 58 auf. Der Grundkörper 58 weist eine als Spanraum 54 ausgebildete Vertiefung 56 auf. Die Vertiefung 56 ist in Drehrichtung 52 vor dem Messer 50 angeordnet. Das Werkzeug 12 weist einen Schaft 102 auf. Die Reibahle 20 weist drei Stützleisten 10 auf. Jede Stützleiste 10 weist eine Stützfläche 44 auf. Jede Stützleiste 10 weist eine erste Stützleistenkante 60 auf. Jede Stützleiste 10 weist eine zweite Stützleistenkante 62 auf. Die Stützleiste 10 weist zumindest ein Einstellmaß 106 auf. Das Einstellmaß 106 ist dazu vorgesehen, eine räumliche Position der Stützleiste 10 zu verändern. Das Einstellmaß 106 ist als zumindest eine Schraubverbindung ausgebildet.

Das Werkzeugeinstell- und/oder Werkzeugmessgerät 14 weist eine Werkzeugaufnahme 64 auf. Die Werkzeugaufnahme 64 ist dazu vorgesehen, ein Werkzeug 12 in Relation zu dem Werkzeugeinstell- und/oder Werkzeugmessgerät 14 zu fixieren. Das Werkzeugeinstell- und/oder Werkzeugmessgerät 14 weist eine Optikeinheit 16 auf. Die Optikeinheit 16 weist eine Durchlichtkamera 24 auf. Die Optikeinheit 16 ist, insbesondere relativ zu der Werkzeugaufnahme 64, beweglich gelagert. Die Optikeinheit 16 weist eine Lichtquelle 66 auf.

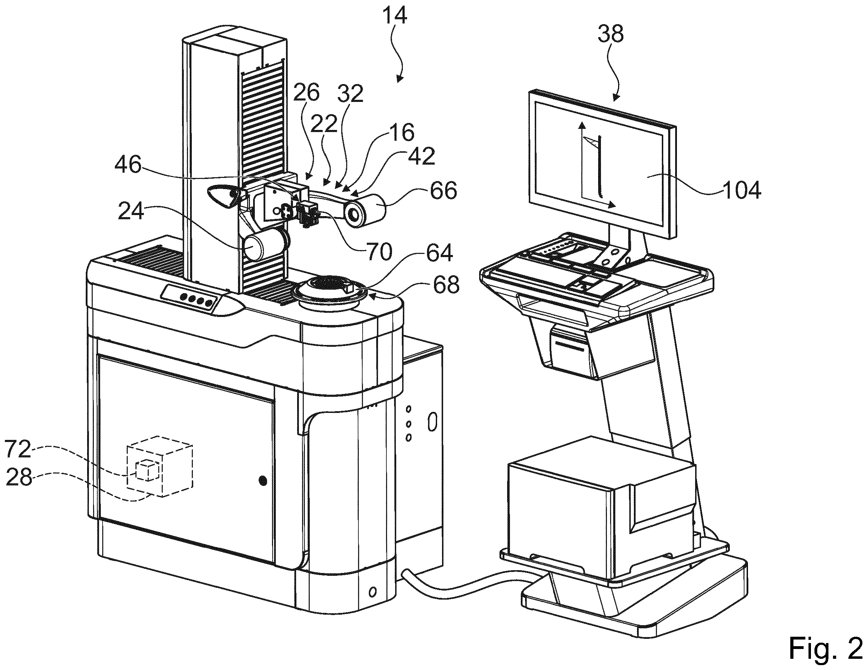

Das Werkzeugeinstell- und/oder Werkzeugmessgerät 14 weist eine Positionierungseinheit 68 auf. Die Positionierungseinheit 68 ist zu einer Positionierung eines in der Werkzeugaufnahme 64 fixierten Werkzeugs 12 in einer Drehposition, insbesondere relativ zu der Optikeinheit 16, vorgesehen. Das Werkzeugeinstell- und/oder Werkzeugmessgerät 14 weist eine Steuereinheit 28 (vgl. Fig. 2) auf. Das Werkzeugeinstell- und/oder Werkzeugmessgerät 14 weist eine Tasteinheit 46 auf. Die Tasteinheit 46 weist einen Taster 70 auf. Die Tasteinheit 46 ist zumindest zu einer taktilen Vermessung zumindest einer Stützleiste 10 und/oder zumindest einer Schneidleiste 108 vorgesehen. Der Taster 70 ist ein- und ausfahrbar.

Das Werkzeugeinstell- und/oder Werkzeugmessgerät 14 weist eine Stütz- und/oder Schneidleistenerfassungseinheit 22 auf. Die Stütz- und/oder Schneidleistenerfassungseinheit 22 ist zumindest dazu vorgesehen, zumindest eine Kenngröße des Werkzeugs 12 zu erfassen. Die Stütz- und/oder Schneidleistenerfassungseinheit 22 ist zumindest dazu vorgesehen, zumindest eine Kenngröße zumindest einer Stützleiste 10 und/oder zumindest einer Schneidleiste 108 des Werkzeugs 12 zu erfassen. Die Stütz- und/oder Schneidleistenerfassungseinheit 22 erfasst zumindest eine Kenngröße des Werkzeugs 12 mittels der Optikeinheit 16 und/oder mittels der Tasteinheit 46. Das Werkzeugeinstell- und/oder Werkzeugmessgerät 14 weist eine Ausgabeeinheit 38 auf. Die Ausgabeeinheit 38 umfasst einen Bildschirm 104. Die Ausgabeeinheit 38 ist zumindest dazu vorgesehen, zumindest eine erfasste Kenngröße auszugeben und/oder zu visualisieren.

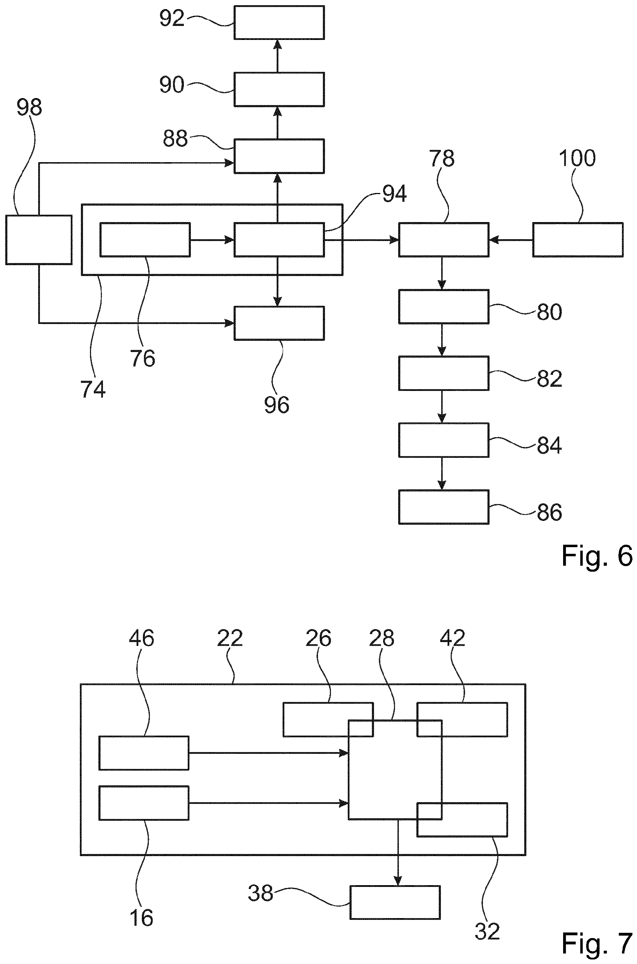

Die Stütz- und/oder Schneidleistenerfassungseinheit 22 weist eine Rundlauferfassungseinheit 26 auf (vgl. Fig. 7). Die Rundlauferfassungseinheit 26 ist dazu vorgesehen, einen Rundlauf des Werkzeugs 12 zu erfassen. Die Rundlauferfassungseinheit 26 berechnet mittels der Steuereinheit 28 den Rundlauf des Werkzeugs 12 auf Basis von mittels der Optikeinheit 16 und/oder mittels der Tasteinheit 46 erfassten, räumlichen Positionen der Stützleisten 10. Die Rundlauferfassungseinheit 26 gibt mittels der Steuereinheit 28 Daten über den erfassten Rundlauf über die Ausgabeeinheit 38 aus. Es ist vorstellbar, dass die Ausgabeeinheit 38 eine visuelle Ausgabe des von der Rundlauferfassungseinheit 26 gemessenen Rundlaufs und/oder eines idealen Rundlaufs ausgibt. Zudem ist vorstellbar, dass die Ausgabeeinheit 38 zumindest eine Vorgabe für eine Einstellung der Stützleiste 10 und/oder der Schneidleiste 108 und/oder für eine Positionsänderung der Stützleisten 10 und/oder der Schneidleiste 108 und/oder zumindest einen Wert zu einer Rundlaufgüte und/oder zu einer Position einer Stützleiste 10 und/oder einer Schneidleiste 108 ausgibt.

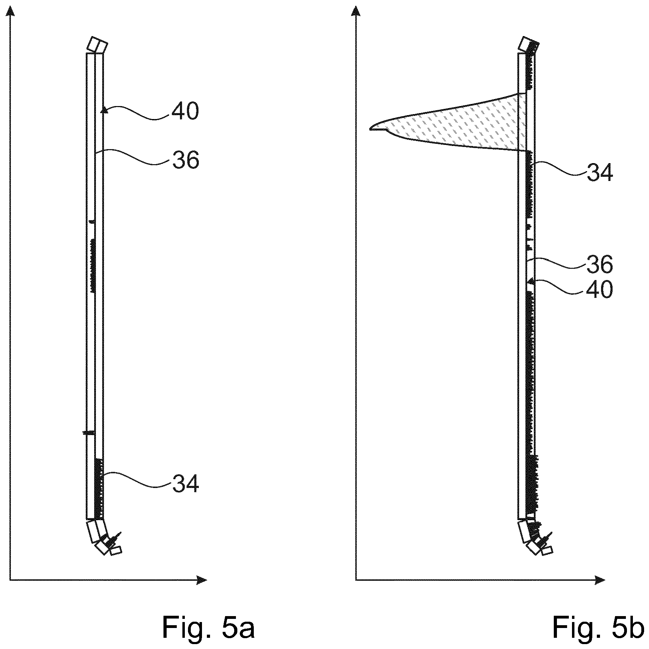

Die Stütz- und/oder Schneidleistenerfassungseinheit 22 weist eine Konturprüfeinheit 32 auf (vgl. Fig. 7). Die Konturprüfeinheit 32 ist dazu vorgesehen, zumindest eine Außenkontur 34 (vgl. Fig. 4) zumindest einer Stützleiste 10 und/oder zumindest einer Schneidleiste 108 zu detektieren und automatisch auf Defektstellen zu untersuchen. Die Außenkontur 34 der Stützleiste 10 ist als eine parallel zu der Rotationsachse 30 auf der Stützfläche 44 der ersten Stützleistenkante 60 und/oder der zweiten Stützleistenkante 62 verlaufende Kurve ausgebildet. Es ist vorstellbar, dass die Außenkontur 34 der Stützleiste 10 mit der ersten Stützleistenkante 60 und/oder der zweiten Stützleistenkante 62 zusammenfällt. Die Konturprüfeinheit 32 gleicht mittels der Steuereinheit 28 den von der Optikeinheit 16 und/oder von der Tasteinheit 46 erfassten Verlauf der Außenkontur 34 mit einem geraden Verlauf und/oder mit einer Sollkontur 36 der Stützleiste 10 ab. Die Sollkontur 36 ist in einer Speichereinheit 72 der Steuereinheit 28 hinterlegt (vgl. Fig. 2). Die Konturprüfeinheit 32 gibt mittels der Steuereinheit 28 Daten über die erfasste Außenkontur 34 und/oder die Sollkontur 36 über die Ausgabeeinheit 38 aus. Es ist vorstellbar, dass die Ausgabeeinheit 38 eine visuelle Ausgabe der von der Konturprüfeinheit 32 gemessenen und/oder geprüften Außenkontur 34, der Sollkontur 36, der Abweichung zwischen Außenkontur 34 und Sollkontur 36 und/oder einer maximal erlaubten Abweichung zwischen Außenkontur 34 und Sollkontur 36 in Form eines Toleranzbands 40 ausgibt (vgl. Fig. 5a und Fig. 5b).

Die Stütz- und/oder Schneidleistenerfassungseinheit 22 weist eine Flächenprüfeinheit 42 auf (vgl. Fig. 7). Die Flächenprüfeinheit 42 ist dazu vorgesehen, zumindest eine Stützfläche 44 zumindest einer Stützleiste 10 und/oder zumindest eine Oberfläche 110 der Schneidleiste 108 zu detektieren und automatisch auf Defektstellen zu untersuchen. Die Flächenprüfeinheit 42 ist zu einer Inspektion der Stützfläche 44 der Stützleiste 10 und/oder der Oberfläche 110 der Schneidleiste 108 vorgesehen. Die Flächenprüfeinheit 42 nimmt mittels der Optikeinheit 16 Einzelbilder von Teilbereichen der Stützfläche 44 und/oder der Oberfläche 110 auf. Die Flächenprüfeinheit 42 setzt mittels der Steuereinheit 28 die Einzelbilder zu einem Gesamtbild zusammen (vgl. auch Fig. 8). Die Flächenprüfeinheit 42 erkennt Abweichungen von einer Standardoberfläche. Die Flächenprüfeinheit 42 gibt mittels der Steuereinheit 28 Daten über die erfasste Stützfläche 44 und/oder Oberfläche 110, beispielsweise das Gesamtbild, mittels der Ausgabeeinheit 38 aus. Es ist vorstellbar, dass die Ausgabeeinheit 38 eine visuelle Ausgabe der von der Flächenprüfeinheit 42 aufgenommene Stützfläche 44 und/oder Oberfläche 110 zusammen mit Markierungen erkannter Defektstellen und/oder möglicher Defektstellen für eine visuelle Begutachtung durch einen Bediener ausgibt (vgl. auch Fig. 8).

Figuren 5a und 5b zeigen Ausgaben der Konturprüfeinheit 32 durch die Ausgabeeinheit 38. Die Außenkontur 34 ist jeweils gemeinsam mit der Sollkontur 36 entlang der Länge der Stützleiste 10 (y-Richtung) angezeigt. Ein Toleranzband 40 mit maximal erlaubten Abweichungen in +x und -x Richtung ist jeweils für die ganze Länge der Stützleiste 10 angezeigt. Das Toleranzband 40 ist über die ganze Länge der Stützleiste 10 konstant. Abweichungen der Außenkontur 34 von der Sollkontur 36 in +x und -x Richtung sind jeweils an der Position eines zugehörigen *y*-Werts angezeigt. Es ist vorstellbar, dass die Anzeige der Abweichungen in +x und -x Richtung zur besseren Sichtbarkeit skalierbar ist. Die in Fig. 5a gezeigten Abweichungen befinden sich ausschließlich innerhalb des Toleranzbands 40. Die in Fig. 5b gezeigten Abweichungen befinden sich teilweise außerhalb des Toleranzbands 40 und bilden eine Defektstelle. Eine Warnmeldung, beispielsweise eine Rotfärbung des Bereichs, welcher über das Toleranzband 40 hinausgeht, signalisiert die Defektstelle.

Bei einem Verfahren zur Vermessung von Stützleisten 10 und/oder zumindest eine Schneidleiste 108 aufweisenden Werkzeugen 12 mittels des Werkzeugeinstell- und/oder Werkzeugmessgeräts 14 mit der Optikeinheit 16 zur berührungslosen Vermessung der Werkzeuge 12, wird in zumindest einem Verfahrensschritt 74 zumindest eine Stützleiste 10 und/oder zumindest eine Schneidleiste 108 des Werkzeugs 12 zumindest teilweise von der Stütz- und/oder Schneidleistenerfassungseinheit 22 berührungslos erfasst. In zumindest einem weiteren Verfahrensschritt 76 werden die zumindest drei Stützleisten 10 und/oder die zumindest eine Schneidleiste 108 eines Werkzeugs 12 von der Stütz- und/oder Schneidleistenerfassungseinheit 22 mittels der Durchlichtkamera 24 optisch erfasst.

In zumindest einem weiteren Verfahrensschritt 78 wird ein Rundlauf des Werkzeugs 12 von der Rundlauferfassungseinheit 26 berührungslos erfasst. In zumindest einem weiteren Verfahrensschritt 80 wird von der Rundlauferfassungseinheit 26 mittels der Steuereinheit 28 auf Basis räumlicher Positionen der zumindest drei Stützleisten 10 ein Mittelpunkt bestimmt. In zumindest einem weiteren Verfahrensschritt 82 wird von der Rundlauferfassungseinheit 26 mittels der Steuereinheit 28 eine Position eines gemeinsamen Mittelpunkts der Stützleisten 10 mit einer Position der Rotationsachse 30 abgeglichen.

In zumindest einem weiteren Verfahrensschritt 84 wird von der Rundlauferfassungseinheit 26 mittels der Steuereinheit 28 zumindest eine Kenngröße für ein Einstellmaß 106 der Stützleisten 10 zu einer Überlagerung eines Mittelpunkts der Stützleisten 10 mit der Rotationsachse 30 ermittelt. In zumindest einem weiteren Verfahrensschritt 86 wird von der Positionierungseinheit 68 eine automatische Positionierung des Werkzeugs 12 in zumindest eine Verstellposition des Werkzeugs 12 auf Basis von mittels der Stütz- und/oder Schneidleistenerfassungseinheit 22 erfassten Daten vorgenommen.

In zumindest einem weiteren Verfahrensschritt 88 wird von der Konturprüfeinheit 32 mittels der Optikeinheit 16 die Außenkontur 34 zumindest einer Stützleiste 10 und/oder zumindest einer Schneidleiste 108 auf Defektstellen untersucht. In zumindest einem weiteren Verfahrensschritt 90 wird mittels der Steuereinheit 28 eine mittels der Konturprüfeinheit 32 ermittelte Außenkontur 34 zumindest einer Stützleiste 10 und/oder zumindest einer Schneidleiste 108 mit einer Sollkontur 36 abgeglichen. In zumindest einem weiteren Verfahrensschritt 92 wird von der Ausgabeeinheit 38 eine Abweichung einer mittels der Konturprüfeinheit 32 gemessenen und/oder geprüften Außenkontur 34 zumindest einer Stützleiste 10 und/oder zumindest einer Schneidleiste 108 von einer Sollkontur 36 der Stützleiste 10 und/oder der Schneidleiste 108 gemeinsam mit dem Toleranzband 40 ausgegeben.

In zumindest einem weiteren Verfahrensschritt 94 wird von der Flächenprüfeinheit 42 mittels der Optikeinheit 16 ein Bild zumindest einer Stützleiste 10 und/oder zumindest einer Schneidleiste 108 aufgenommen. In zumindest einem weiteren Verfahrensschritt 96 wird von der Flächenprüfeinheit 42 mittels der Steuereinheit 28 eine automatische Bilderkennung zur Untersuchung und/oder Inspektion zumindest einer Stützfläche 44 der Stützleiste 10 und/oder zumindest einer Oberfläche 110 der Schneidleiste 108 auf Defektstellen durchgeführt.

In zumindest einem weiteren Verfahrensschritt 98 wird von der Flächenprüfeinheit 42 und/oder von der Konturprüfeinheit 32 bei einer Identifikation zumindest einer Defektstelle eine Warnmeldung ausgelöst. Die Warnmeldung kann akustische Warnungen, beispielsweise Sirenengeheul, und/oder optische Warnungen, beispielsweise Warnleuchten und/oder Warnmeldungen der Ausgabeeinheit 38, umfassen.

In zumindest einem weiteren Verfahrensschritt 100 wird der Rundlauf von der Tasteinheit 46 taktil erfasst.

Fig. 8 zeigt schematisch beispielhafte Anzeigen der Flächenprüfeinheit 42, wie sie mittels der Ausgabeeinheit 38 anzeigbar sind. Die Anzeigen zeigen ein Gesamtbild der Schneidleiste 108 in einer auf den Spanraum 54 gerichteten Ansicht (links), ein Gesamtbild der Schneidleiste 108 in einer in Radialrichtung auf die Schneidleiste 108 gerichteten Ansicht (Mitte) und ein Gesamtbild der Stützleiste 10 in einer in Radialrichtung auf die Stützleiste 10 gerichteten Ansicht (rechts). Die Schneidleiste 108 ist mit einer Halterung 114 an dem Werkzeug 12 gehaltert. Die Halterung 114 ist innerhalb des Spanraums 54 angeordnet. Die in der Ausgabe gezeigte Schneidleiste 108 weist eine Beschädigung 116 auf. Die Beschädigung 116 ist als ein Flächenschaden 120 ausgebildet. Der Flächenschaden 120 ist als eine Vertiefung, insbesondere als eine Materialabplatzung ausgebildet. Die in der Ausgabe gezeigte Stützleiste 10 weist Beschädigungen 116 auf. Die Beschädigungen 116 sind als Flächenschaden 120 und/oder als ein Riss 118 ausgebildet. Risse 118 können insbesondere auftreten, wenn ein Werkzeug 12, insbesondere eine Reibahle 20 während eines Bearbeitungsvorgangs an einem Werkstück unzureichend gekühlt wird. Mittels der Ausgabe der Gesamtbilder durch die Flächenprüfeinheit 42 kann ein Benutzer vorteilhaft schnell und einfach Stützleisten 10 und Schneidleisten 108 auf Beschädigungen 116 überprüfen. Dadurch können vorteilhaft beschädigte Werkzeuge 12, insbesondere bereits vor einem Einmessen aussortiert werden.

### Bezugszeichen

- 10: Stützleiste
- 12: Werkzeug
- 14: Werkzeugeinstell- und/oder Werkzeugmessgerät
- 16: Optikeinheit
- 18: Schneide
- 20: Reibahle
- 22: Stütz- und/oder Schneidleistenerfassungseinhei t
- 24: Durchlichtkamera
- 26: Rundlauferfassungseinheit
- 28: Steuereinheit
- 30: Rotationsachse
- 32: Konturprüfeinheit
- 34: Außenkontur
- 36: Sollkontur
- 38: Ausgabeeinheit
- 40: Toleranzband
- 42: Flächenprüfeinheit
- 44: Stützfläche
- 46: Tasteinheit
- 48: System
- 50: Messer
- 52: Drehrichtung
- 54: Spanraum
- 56: Vertiefung
- 58: Grundkörper
- 60: Erste Stützleistenkante
- 62: Zweite Stützleistenkante
- 64: Werkzeugaufnahme
- 66: Lichtquelle
- 68: Positionierungseinheit
- 70: Taster
- 72: Speichereinheit
- 74: Verfahrensschritt
- 76: Verfahrensschritt
- 78: Verfahrensschritt
- 80: Verfahrensschritt
- 82: Verfahrensschritt
- 84: Verfahrensschritt
- 86: Verfahrensschritt
- 88: Verfahrensschritt
- 90: Verfahrensschritt
- 92: Verfahrensschritt
- 94: Verfahrensschritt
- 96: Verfahrensschritt
- 98: Verfahrensschritt
- 100: Verfahrensschritt
- 102: Schaft
- 104: Bildschirm
- 106: Einstellmaß
- 108: Schneidleiste
- 110: Oberfläche
- 112: Schneidkante
- 114: Halterung
- 116: Beschädigung
- 118: Riss
- 120: Flächenschaden

## Patentansprüche

1. Verfahren zur, insbesondere zumindest zu einem Großteil automatisierten, Vermessung von Stützleisten (10) und/oder zumindest eine Schneidleiste (108) aufweisenden Werkzeugen (12), insbesondere von Reibahlen (20), mittels eines Werkzeugeinstell- und/oder Werkzeugmessgeräts (14) mit zumindest einer Optikeinheit (16) zur berührungslosen Vermessung der Werkzeuge (12), insbesondere der Reibahlen (20), vorzugsweise zumindest einer Schneide (18) der Reibahlen (20), wobei zumindest eine Stützleiste (10) und/oder zumindest eine Schneidleiste (108) zumindest eines Werkzeugs (12), insbesondere Reibahle (20), zumindest teilweise von einer Stütz- und/oder Schneidleistenerfassungseinheit (22) des Werkzeugeinstell- und/oder Werkzeugmessgeräts (14) berührungslos erfasst wird, **dadurch gekennzeichnet, dass** ein Rundlauf des Werkzeugs (12) von einer Rundlauferfassungseinheit (26) der Stütz- und/oder Schneidleistenerfassungseinheit (22) berührungslos erfasst wird, wobei von der Rundlauferfassungseinheit (26) mittels einer Steuereinheit (28) des Werkzeugeinstell- und/oder Werkzeugmessgeräts (14) zumindest eine Kenngröße für ein Einstellmaß (106) der Stützleisten (10) zu einer Überlagerung eines Mittelpunkts der Stützleisten (10) mit einer Rotationsachse (30) des Werkzeugs (12), insbesondere der Reibahle (20), ermittelt wird und wobei von einer Positionierungseinheit (68) des Werkzeugeinstell- und/oder Werkzeugmessgeräts (14) eine automatische Positionierung des Werkzeugs (12), insbesondere der Reibahle (20), in zumindest eine Verstellposition des Werkzeugs (12), insbesondere der Reibahle (20), auf Basis von mittels der Stütz- und/oder Schneidleistenerfassungseinheit (22) erfassten Daten vorgenommen wird, wobei die Verstellposition zumindest eine Position des Werkzeugs (12), insbesondere der Reibahle (20), in Relation zu dem Werkzeugeinstell- und/oder Werkzeugmessgerät (14) ist, welche dazu vorgesehen ist, eine zu verstellende Stützleiste (10) und/oder Schneidleiste (108) einfach für einen Bediener erreichbar zu machen.

2. Verfahren nach Anspruch 1, **dadurch gekennzeichnet, dass** zumindest eine, vorzugsweise zumindest drei, Stützleisten (10) und/oder zumindest eine Schneidleiste (108) des Werkzeugs (12) von der Stütz- und/oder Schneidleistenerfassungseinheit (22) zumindest mittels einer Durchlichtkamera (24) der Optikeinheit (16) optisch erfasst werden.

3. Verfahren nach Anspruch 1, **dadurch gekennzeichnet, dass** von der Rundlauferfassungseinheit (26) mittels einer Steuereinheit (28) des Werkzeugeinstell- und/oder Werkzeugmessgeräts (14) auf Basis räumlicher Positionen zumindest einer, vorzugsweise zumindest dreier, Stützleisten (10) ein Mittelpunkt bestimmt wird.

4. Verfahren nach einem der vorhergehenden Ansprüche, **dadurch gekennzeichnet, dass** von der Rundlauferfassungseinheit (26) mittels einer Steuereinheit (28) des Werkzeugeinstell- und/oder Werkzeugmessgeräts (14) eine Position eines gemeinsamen Mittelpunkts der Stützleisten (10) mit einer Position einer Rotationsachse (30) des Werkzeugs (12), insbesondere der Reibahle (20), abgeglichen wird.

5. Verfahren nach einem der vorhergehenden Ansprüche, **dadurch gekennzeichnet, dass** von einer Konturprüfeinheit (32) der Stütz- und/oder Schneidleistenerfassungseinheit (22) mittels der Optikeinheit (16) eine Außenkontur (34) zumindest einer Stützleiste (10) und/oder zumindest einer Schneidleiste (108) auf Defektstellen untersucht wird.

6. Verfahren nach Anspruch 5, **dadurch gekennzeichnet, dass** mittels einer Steuereinheit (28) des Werkzeugeinstell- und/oder Werkzeugmessgeräts (14) eine mittels der Konturprüfeinheit (32) ermittelte Außenkontur (34) zumindest einer Stützleiste (10) und/oder zumindest einer Schneidleiste (108) mit einer Sollkontur (36) abgeglichen wird.

7. Verfahren nach Anspruch 5 oder 6, **dadurch gekennzeichnet, dass** von einer Ausgabeeinheit (38) des Werkzeugeinstell- und/oder Werkzeugmessgeräts (14) eine Abweichung einer mittels der Konturprüfeinheit (32) gemessenen Außenkontur (34) zumindest einer Stützleiste (10) und/oder zumindest einer Schneidleiste (108) von einer Sollkontur (36) gemeinsam mit einem Toleranzband (40) ausgegeben wird.

8. Verfahren nach einem der vorhergehenden Ansprüche, **dadurch gekennzeichnet, dass** von einer Flächenprüfeinheit (42) der Stütz- und/oder Schneidleistenerfassungseinheit (22) mittels der Optikeinheit (16) ein Bild zumindest einer Stützleiste (10) und/oder zumindest einer Schneidleiste (108) aufgenommen wird.

9. Verfahren nach Anspruch 8, **dadurch gekennzeichnet, dass** von der Flächenprüfeinheit (42) mittels einer Steuereinheit (28) des Werkzeugeinstell- und/oder Werkzeugmessgeräts (14) eine automatische Bilderkennung zur Untersuchung zumindest einer Stützfläche (44) der Stützleiste (10) und/oder zumindest einer Oberfläche (110) der Schneidleiste (108) auf Defektstellen durchgeführt wird.

10. Verfahren nach einem der Ansprüche 5, 6, 8 oder 9, **dadurch gekennzeichnet, dass** von der Flächenprüfeinheit (42) und/oder von der Konturprüfeinheit (32) bei einer Identifikation zumindest einer Defektstelle eine Warnmeldung ausgelöst wird.

11. Verfahren zumindest nach dem Oberbegriff von Anspruch 1, insbesondere nach einem der vorhergehenden Ansprüche, **dadurch gekennzeichnet, dass** der Rundlauf zumindest von einer Tasteinheit (46) des Werkzeugeinstell- und/oder Werkzeugmessgeräts (14) taktil erfasst wird.

12. Werkzeugeinstell- und/oder Werkzeugmessgerät (14) mit einer Optikeinheit (16), welche eine Messanordnung mit einer Durchlichtkamera (24) und/oder eine Messanordnung mit einer Auflichtkamera aufweist und mit einer Stütz- und/oder Schneidleistenerfassungseinheit (22), welche dazu vorgesehen ist, mittels der Optikeinheit (16) zumindest eine Kenngröße zumindest eines Werkzeugs (12), insbesondere einer Reibahle (20), und/oder zumindest einer Stützleiste (10) und/oder zumindest einer Schneidleiste (108) eines Werkzeugs (12), insbesondere einer Reibahle (20), mittels einem Verfahren nach einem der vorhergehenden Ansprüche berührungslos zu erfassen.

13. System (48) mit zumindest einem Werkzeugeinstell- und/oder Werkzeugmessgerät (14) mit einer Stütz- und/oder Schneidleistenerfassungseinheit (22) nach Anspruch 12 und mit zumindest einem, insbesondere Stützleisten (10) und/oder zumindest eine Schneidleiste aufweisenden, Werkzeug (12), insbesondere einer Reibahle (20).

## Claims

1. Method for an, in particular at least largely automated, measurement of tools (12), in particular reamers (20), which comprise support bars (10) and/or at least one cutter bar (108), by means of a tool presetting and/or tool measuring apparatus (14) with at least one optics unit (16) for a contact-free measuring of the tools (12), in particular the reamers (20), preferably of at least one cutting edge (18) of the reamers (20), wherein at least one support bar (10) and/or at least one cutting bar (108) of at least one tool (12), in particular reamer (20), is at least partially captured in a contact-free manner by a support bar and/or cutting bar capturing unit (22) of the tool presetting and/or tool measuring apparatus (14),
**characterised in that** a true-running of the tool (12) is captured in a contact-free manner by a true-running capturing unit (26) of the support bar and/or cutting bar capturing unit (22),
wherein for a superposition of a centre point of the support bars (10) with a rotary axis (30) of the tool (12), in particular the reamer (20), at least one parameter for a setting dimension (106) of the support bars (10) is determined by the true-running capturing unit (26) using a control unit (28) of the tool presetting and/or tool measuring apparatus (14), and
wherein an automatic positioning of the tool (12), in particular the reamer (20), into at least one adjustment position of the tool (12), in particular the reamer (20), is carried out by a positioning unit (68) of the tool presetting and/or tool measuring apparatus (14) on the basis of data captured by means of the support bar and/or cutting bar capturing unit (22),
wherein the adjustment position is at least one position of the tool (12), in particular the reamer (20), with respect to the tool presetting and/or tool measuring apparatus (14), which is configured to make a support bar (10) and/or cutting bar (108) that is to be adjusted easily accessible for an operator.

2. Method according to claim 1,
**characterised in that** at least one support bar (10), preferably at least three support bars (10), and/or at least one cutting bar (108) of the tool (12) are optically captured by the support bar and/or cutting bar capturing unit (22) at least by means of a transmitted-light camera (24) of the optics unit (16).

3. Method according to claim 1,
**characterised in that** a centre point is determined by the true-running capturing unit (26), using a control unit (28) of the tool presetting and/or tool measuring apparatus (14), on the basis of spatial positions of at least one support bar (10), preferably of at least three support bars (10).

4. Method according to one of the preceding claims,
**characterised in that** a position of a shared centre point of the support bars (10) is matched with a position of a rotary axis (30) of the tool (12), in particular the reamer (20), by the true-running unit (26) using a control unit (28) of the tool presetting and/or tool measuring apparatus (14).

5. Method according to one of the preceding claims,
**characterised in that** an outer contour (34) of at least one support bar (10) and/or at least one cutting bar (108) is checked for fault points by a contour checking unit (32) of the support bar and/or cutting bar capturing unit (22) using the optics unit (16).

6. Method seat according to claim 5,
**characterised in that** an outer contour (34) of at least one support bar (10) and/or at least one cutting bar (108), determined by means of the contour checking unit (32), is matched with a nominal contour (36) using a control unit (28) of the tool presetting and/or tool measuring apparatus (14).

7. Method according to claim 5 or 6,
**characterised in that** a deviation of an outer contour (34) of at least one support bar (10) and/or at least one cutting bar (108), measured by the contour checking unit (32), from a nominal contour (36) is outputted together with a tolerance band (40) by an output unit (38) of the tool presetting and/or tool measuring apparatus (14).

8. Method according to one of the preceding claims,
**characterised in that** an image of at least one support bar (10) and/or at least one cutting bar (108) is taken by a surface checking unit (42) of the support bar and/or cutting bar capturing unit (22) using the optics unit (16).

9. Method according to claim 8,
**characterised in that** for the purpose of checking at least one support surface (44) of the support bar (10) and/or at least one surface (110) of the cutting bar (108) for fault points, an automatic image recognition is carried out by the surface checking unit (42) using a control unit (28) of the tool presetting and/or tool measuring apparatus (14).

10. Method according to one of claims 5, 6, 8 or 9,
**characterised in that** in the case of identifying at least one fault point, a warning notification is triggered by the surface checking unit (42) and/or by the contour checking unit (32).

11. Method at least according to the preamble of claim 1, in particular according to one of the preceding claims,
**characterised in that** the true-running is captured haptically at least by a feeler unit (46) of the tool presetting and/or tool measuring apparatus (14).

12. Tool presetting and/or tool measuring apparatus (14)
with an optics unit (16) comprising a measuring arrangement with a transmitted-light camera (24) and/or a measuring arrangement with an incident-light camera, and with a support bar and/or cutting bar capturing unit (22), which is configured to capture in a contact free manner, using the optics unit (16), at least one parameter of at least one tool (12), in particular a reamer (20), and/or of at least one support bar (10) and/or of at least one cutting bar (108) of a tool (12), in particular a reamer (20), by means of a method according to one of the preceding claims.

13. System (48)
with at least one tool presetting and/or tool measuring apparatus (14) comprising a support bar and/or cutting bar capturing unit (22) according to claim 12 and with at least one tool (12), in particular a reamer (20), in particular comprising support bars (10) and/or at least one cutting bar.

## Revendications

1. Procédé pour une mesure, en particulier une mesure au moins en grande partie automatisée, des outils (12), notamment des alésoirs (20), comprenant des barres-support (10) et/ou au moins une barre-coupe (108), par le biais d'un appareil de réglage et/ou de mesure d'outil (14) ayant au moins une unité optique (16) pour la mesure sans-contact des outils (12), en particuliers des alésoirs (20), de préférence d'au moins un coupant (18) des alésoirs (20),
où au moins une barre-support (10) et/ou au moins une barre-coupe (108) d'au moins un outil (12), en particulier alésoir (20), est au moins partiellement enregistrée sans contact par une unité d'enregistrement de barres-support et/ou de barres-coupe (22) de l'appareil de réglage et/ou de mesure d'outil (14),
**caractérisé en ce qu'**une concentricité de l'outil (14) est enregistrée sans contact par une unité d'enregistrement de concentricité (26) de l'unité d'enregistrement de barres-support et/ou de barres-coupe (22),
où pour une superposition d'un centre des barres-support (10) avec un axe rotatif (30) de l'outil (12), en particulier de l'alésoir (20), au moins un paramètre pour une mesure de réglage (106) des barres-support (10) est déterminé par l'unité d'enregistrement de concentricité (26) moyennant une unité de commande (28) de l'appareil de réglage et/ou de mesure d'outil (14) et
où un positionnement automatique de l'outil (12), en particulier de l'alésoir (20), dans au moins une position d'ajustage de l'outil (12), en particulier de l'alésoir (20), est exécuté par une unité de positionnement (68) de l'appareil de réglage et/ou de mesure d'outil (14) sur la base de données saisies par l'unité d'enregistrement de barres-support et/ou de barres-coupe (22),
la position d'ajustage étant au moins une position de l'outil (12), en particulier de l'alésoir (20), par rapport à l'appareil de réglage et/ou de mesure d'outil (14), prévue pour faire une barre-support (10) et/ou une barre-coupe (108) à ajuster facilement accessible pour un opérateur.

2. Procédé selon la revendication 1,
**caractérisé en ce qu'**au moins une barre-support (10), préférablement au moins trois barres-support (10), et/ou au moins une barre-coupe (108) de l'outil (12) sont enregistrées optiquement par l'unité d'enregistrement de barres-support et/ou de barres-coupe (22) au moins moyennant une caméra à lumière transmise (24) de l'unité optique (16).

3. Procédé selon la revendication 1,
**caractérisé en ce qu'**un centre est déterminé par l'unité d'enregistrement de concentricité (26) moyennant une unité de commande (28) de l'appareil de réglage et/ou de mesure d'outil (14) sur la base des positions spatiales d'au moins une barre-support (10), de préférence d'au moins trois barres-support (10).

4. Procédé selon l'une des revendications précédentes,
**caractérisé en ce qu'**une position d'un centre conjoint des barres-support (10) est accordée avec une position d'un axe rotatif (30) de l'outil (12), en particulier de l'alésoir (20), par l'unité d'enregistrement de concentricité (26) moyennant une unité de commande (28) de l'appareil de réglage et/ou de mesure d'outil (14).

5. Procédé selon l'une des revendications précédentes,
**caractérisé en ce qu'**un contour extérieur (34) d'au moins une barre-support (10) et/ou d'au moins une barre-coupe (108) est inspecté concernant des points défectueux par une unité d'inspection de contour (32) de l'unité d'enregistrement de barres-support et/ou de barres-coupe (22) moyennant l'unité optique (16).

6. Procédé selon la revendication 5,
**caractérisé en ce qu'**un contour extérieur (34) d'au moins une barre-support (10) et/ou d'au moins une barre-coupe (108), déterminé moyennant l'unité d'inspection de contour (32), est accordé avec un contour prescrit (36) par le biais d'une unité de commande (28) de l'appareil de réglage et/ou de mesure d'outil (14).

7. Procédé selon la revendication 5 ou 6,
**caractérisé en ce qu'**une déviation d'un contour extérieur (34) d'au moins une barre-support (10) et/ou d'au moins une barre-coupe (108), mésuré moyennant l'unité d'inspection de contour (32), d'un contour prescrit (36) est sortie par une unité de sortie (38) de l'appareil de réglage et/ou de mesure d'outil (14) conjointement avec unde bande de tolérance (40).

8. Procédé selon l'une des revendications précédentes,
**caractérisé en ce qu'**une image d'au moins une barre-support (10) et/ou d'au moins une barre-coupe (108) est prise par une unité d'inspection de surface (42) de l'unité d'enregistrement de barres-support et/ou de barres-coupe (22) moyennant l'unité optique (16).

9. Procédé selon la revendication 8,
**caractérisé en ce que** pour l'inspection d'au moins une surface d'appui (44) de la barre-support (10) et/ou d'au moins une surface (110) de la barre-coupe (108) concernant des points defectueux, une reconnaissance d'image automatique est exécutée par l'unité d'inspection de surface (42) moyennant une unité de commande (28) de l'appareil de réglage et/ou de mesure d'outil (14).

10. Procédé selon l'une des revendications 5, 6, 8 ou 9,
**caractérisé en ce qu'**en cas d'une identification d'au moins un point defectueux un message d'avertissement est déclenché par l'unité d'inspection de surface (42) et/ou par l'unité d'inspection de contour (32).

11. Procédé au moins selon le préambule de la revendication 1, en particulier selon l'une des revendications précédentes,
**caractérisé en ce que** la concentricité est enregistrée haptiquement au moins par une unité tactile (46) de l'appareil de réglage et/ou de mesure d'outil (14).

12. Appareil de réglage et/ou de mesure d'outil (14)
avec une unité optique (16) comprenant un ensemble de mesure avec une caméra à lumière transmise (24) et/ou un ensemble de mesure avec une caméra à lumière incidente, et
avec une unité d'enregistrement de barres-support et/ou de barres-coupe (22) qui est prévue pour enregistrer sans contact, par l'unité optique (16), moyennant un procédé selon l'une des revendications précédentes, au moins un paramètre d'au moins un outil (12), en particulier d'un alésoir (20), et/ou d'au moins une barre-support (10) et/ou d'au moins une barre-coupe (108) d'un outil (12), en particulier d'un alésoir (20).

13. Système (48)
avec au moins un appareil de réglage et/ou de mesure d'outil (14) comprenant une unité d'enregistrement de barres-support et/ou de barres-coupe (22) selon la revendication 12 et
avec au moins un outil (12), en particulier un alésoir (20), comprenant en particulier des barres-support (10) et/ou au moins une barre-coupe.
